(19) Europäisches Patentamt
European Patent Office
Office européen des brevets

(11) EP 4 074 520 B1

(12) EUROPEAN PATENT SPECIFICATION

(45) Date of publication and mention of the grant of the patent:
**23.08.2023 Bulletin 2023/34**

(21) Application number: **22165079.9**

(22) Date of filing: **29.03.2022**

(51) International Patent Classification (IPC):
***B60C 1/00*** $^{(2006.01)}$ ***C08L 7/00*** $^{(2006.01)}$

(52) Cooperative Patent Classification (CPC):
(C-Sets available)
**B60C 1/0016; C08L 7/00** (Cont.)

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.04.2021 JP 2021069097**

(43) Date of publication of application:
**19.10.2022 Bulletin 2022/42**

(73) Proprietor: **Sumitomo Rubber Industries, Ltd.**
**Kobe-shi, Hyogo-ken 651-0072 (JP)**

(72) Inventor: **KITAMURA, Naoya**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**WO-A1-2020/246128**
**JP-A- 2019 111 892**
**US-A1- 2018 111 422**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08L 9/06, C08L 9/00, C08L 63/00, C08L 91/06, C08K 3/04, C08K 3/36, C08K 5/548, C08K 5/18, C08K 5/3437, C08K 5/09, C08K 3/22, C08K 3/06, C08K 5/47**

## Description

TECHNICAL FIELD

The present disclosure relates to a tire.

BACKGROUND ART

The recent demand for more fuel efficient tires has created a need to improve the fuel economy of the tread formulation, for example. An effective method for improving fuel economy is to reduce the amount of carbon black or silica as filler. However, disadvantageously, the reduction in filler content reduces the strength of the tread rubber, resulting in deteriorated chipping resistance and abrasion resistance. Further, it reduces the rigidity of the tread portion, resulting in deteriorated handling stability.

SUMMARY OF DISCLOSURE

TECHNICAL PROBLEM

The present disclosure aims to solve the above problem and provide a tire that provides improved overall performance in terms of fuel economy, abrasion resistance, and handling stability.

SOLUTION TO PROBLEM

The present disclosure relates to a tire, including a tread including a rubber composition,

the rubber composition containing: rubber components including an isoprene-based rubber, a polybutadiene rubber, and a styrene-butadiene rubber; and fillers including silica and carbon black,
the rubber composition satisfying the following relationships (1) to (3):

(1) Isoprene-based rubber content > Styrene-butadiene rubber content;
(2) Isoprene-based rubber content > Polybutadiene rubber content; and
(3) Silica content ≥ Carbon black content,

the tire satisfying the following relationships (4) and (5) with respect to a tan δ at 30°C of the rubber composition and a negative ratio N (%) of the tread:

(4) tan δ at 30°C < 0.10; and
(5) tan δ at 30°C × N < 4.0.

ADVANTAGEOUS EFFECTS OF DISCLOSURE

The present disclosure provides a tire including a tread including a rubber composition in which the rubber composition contains rubber components including an isoprene-based rubber, a polybutadiene rubber, and a styrene-butadiene rubber, and fillers including silica and carbon black, and satisfies relationships (1) to (3), and the tire satisfies relationships (4) and (5) with respect to the tan δ at 30°C of the rubber composition and the negative ratio N (%) of the tread. Such a tire provides improved overall performance in terms of fuel economy, abrasion resistance, and handling stability.

BRIEF DESCRIPTION OF DRAWINGS

Fig.1 is a tire meridian cross-sectional view of a pneumatic tire according to an embodiment of the present disclosure.
Fig. 2 is an enlarged view showing the sidewall and bead portions shown in Fig. 1.

DESCRIPTION OF EMBODIMENTS

The tire of the present disclosure includes a tread including a rubber composition which contains rubber components including an isoprene-based rubber, a polybutadiene rubber, and a styrene-butadiene rubber, and fillers including silica and carbon black. The rubber composition satisfies relationships (1) to (3), and the tire satisfies relationships (4) and (5) with respect to the tan δ at 30°C of the rubber composition and the negative ratio N (%) of the tread. The tire has excellent overall performance in terms of fuel economy, abrasion resistance, and handling stability.

The reason for the above advantageous effect is not exactly clear, but is believed to be due to the following mechanism.

When a rubber composition for forming a tread is prepared in which the isoprene-based rubber content is adjusted to be high enough to satisfy relationships (1) and (2), and the silica content is adjusted to be equal to or higher than the carbon black content (relationship (3)), it is considered that the heat build-up in the tread rubber is reduced to a low level due to the high isoprene-based rubber content and the high silica content, and further the strength of the tread rubber is increased, providing good abrasion resistance and handling stability. Moreover, when the tan δ at 30°C of the rubber composition is adjusted to be lower than a predetermined value (relationship (4)), and the product of the tan δ and the negative ratio N (%) of the tread is adjusted to be lower than a predetermined value (relationship (5)), it is considered that the heat build-up in the tread rubber is further reduced, while the low groove area ratio of the tread provides good handling stability and abrasion resistance. The above mechanism is believed to improve fuel economy while providing good abrasion resistance and handling stability, thereby improving overall performance in terms of these properties.

As described above, the present disclosure solves the problem (purpose) of improving overall performance in terms of fuel economy, abrasion resistance, and handling stability by formulating a tire that satisfies the relationship (1) "Isoprene-based rubber content > Styrene-butadiene rubber content", the relationship (2) "Isoprene-based rubber content > Polybutadiene rubber content", the relationship (3) "Silica content ≥ Carbon black content", the relationship (4) "tan δ at 30°C < 0.10", and the relationship (5) "tan δ at 30°C × N < 4.0". In other words, the parameters of relationships (1) to (5) do not define the problem (purpose), and the problem herein is to improve overall performance in terms of fuel economy, abrasion resistance, and handling stability. In order to solve this problem, the tire has been formulated to satisfy the parameters.

An embodiment of the present disclosure will be described below with reference to the drawings, but the present disclosure is not limited to the embodiment.

Fig.1 is a tire meridian cross-sectional view of a pneumatic tire (hereinafter, also referred to simply as "tire") 1 according to an embodiment of the present disclosure in a normal state, including the axis of rotation (not shown) of the tire. Fig. 1 shows as a preferred embodiment a passenger vehicle tire 1 which can be suitably mounted on a 4WD vehicle or the like that is capable of running not only on dry asphalt but also on rough roads such as rubble roads or muddy ground. However, the tire may also be used as a heavy duty tire 1, for example.

Herein, the term "normal state" refers to a state where the tire 1 is mounted on a normal rim (not shown) and inflated to a normal internal pressure and under no load. The dimensions and other characteristics of tire components are determined in such a normal state, unless otherwise stated.

The term "normal rim" refers to a rim specified for each tire by the standards in a standard system including standards according to which the tire 1 is provided, and may be, for example, "standard rim" in JATMA, "design rim" in TRA, or "measuring rim" in ETRTO.

The term "normal internal pressure" refers to an air pressure specified for each tire by the standards in a standard system including standards according to which the tire 1 is provided, and may be "maximum air pressure" in JATMA, a maximum value shown in Table "TIRE LOAD LIMITS AT VARIOUS COLD INFLATION PRESSURES" in TRA, or "inflation pressure" in ETRTO.

The tire 1 according to this embodiment includes a tread portion 2, a pair of sidewall portions 3, 3 extending radially inwardly (with respect to the tire) from the tread portion 2, and a pair of bead portions 4, 4 respectively connected radially inwardly of the pair of sidewall portions 3, 3. A circular bead core 5 is embedded in each bead portion 4.

For example, the tire 1 includes a tread rubber 2G which constitutes the tread ground contact surface 2a of the tread portion 2, a sidewall rubber 3G which constitutes the outer surface 3a of the sidewall portion 3, and a clinch rubber 4G which constitutes the outer surface 4a of the bead portion 4. Known embodiments of the sidewall rubber 3G and the clinch rubber 4G may be appropriately used.

The tread rubber 2G is formed from a rubber composition that contains rubber components including an isoprene-based rubber, a polybutadiene rubber (BR), and a styrene-butadiene rubber (SBR), and fillers including silica and carbon black.

The rubber composition forming the tread rubber 2G contains an isoprene-based rubber, BR, and SBR, for example. Examples of rubber components that may be used in addition to these rubber components include diene rubbers other than isoprene-based rubbers, BR, and SBR, such as acrylonitrile-butadiene rubbers (NBR), chloroprene rubbers (CR), butyl rubbers (IIR), and styrene-isoprene-butadiene copolymer rubbers (SIBR).

Diene rubbers such as isoprene-based rubbers, BR, and SBR may be either unmodified or modified diene rubbers.

Examples of the modified diene rubbers include diene rubbers having a functional group interactive with filler such as silica or carbon black. Specific examples include a chain end-modified diene rubber obtained by modifying at least one chain end of a diene rubber with a compound (modifier) having the functional group (i.e., a chain end-modified diene rubber terminated with the functional group); a backbone-modified diene rubber having the functional group in the backbone; a backbone- and chain end-modified diene rubber having the functional group in both the backbone and chain end (e.g., a backbone- and chain end-modified diene rubber in which the backbone has the functional group and at least one chain end is modified with the modifier); and a chain end-modified diene rubber into which a hydroxy or epoxy group has been introduced by modification (coupling) with a polyfunctional compound having two or more epoxy groups in the molecule. These may be used alone or in combinations of two or more.
Examples of the functional group include functional groups having at least one atom selected from the group consisting of a nitrogen atom, an oxygen atom, and a silicon atom. These may be used alone or in combinations of two or more.
Specific examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. To more suitably achieve the advantageous effect, amino (preferably amino whose hydrogen atom is replaced with a C1-C6 alkyl group), alkoxy (preferably C1-C6 alkoxy), and alkoxysilyl (preferably C1-C6 alkoxysilyl) groups are preferred among these.
Examples of isoprene-based rubbers include natural rubbers (NR), polyisoprene rubbers (IR), refined NR, modified NR, and modified IR. The NR may be those commonly used in the tire industry such as SIR20, RSS#3, and TSR20. The IR may be those commonly used in the tire industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more.
Any BR may be used. Examples include those commonly used in the tire industry, such as high-cis BR, BR containing 1,2-syndiotactic polybutadiene crystals (SPB-containing BR), polybutadiene rubbers synthesized using rare earth catalysts (rare earth-catalyzed BR), and polybutadiene rubbers modified by tin compounds (tin-modified BR). The BR used may be commercially available, e.g., from Ube Industries, Ltd., JSR Corporation, Asahi Kasei Corporation, Zeon Corporation, etc. These may be used alone or in combinations of two or more.
The BR may be either unmodified or modified BR.
Examples of the modified BR include BR having the above-mentioned functional groups.
From the standpoint of ice performance, the cis content of the BR is preferably 80% by mass or higher, more preferably 85% by mass or higher, still more preferably 90% by mass or higher, particularly preferably 95% by mass or higher. Herein, the cis content (cis-1,4-linkage content) is measured by infrared absorption spectrometry or calculated from the signal intensity measured by NMR analysis.
Any SBR may be used, including for example emulsion-polymerized styrene-butadiene rubbers (E-SBR) and solution-polymerized styrene-butadiene rubbers (S-SBR). These may be used alone or in combinations of two or more.
The styrene content of the SBR is preferably 5.0% by mass or higher, more preferably 10.0% by mass or higher, still more preferably 15.0% by mass or higher, particularly preferably 20.0% by mass or higher. Moreover, the upper limit of the styrene content is preferably 60.0% by mass or lower, more preferably 50.0% by mass or lower, still more preferably 40.0% by mass or lower, particularly preferably 30.0% by mass or lower. When the styrene content is within the range indicated above, the advantageous effect tends to be better achieved.
Herein, the styrene content of the SBR is determined by $^1$H-NMR analysis.
The vinyl content of the SBR is preferably 5.0% by mass or higher, more preferably 10.0% by mass or higher, still more preferably 12.0% by mass or higher, particularly preferably 14.0% by mass or higher. The vinyl content is preferably 50.0% by mass or lower, more preferably 30.0% by mass or lower, still more preferably 20.0% by mass or lower, particularly preferably 18.0% by mass or lower. When the vinyl content is within the range indicated above, the advantageous effect tends to be better achieved.
The vinyl content (1,2-butadiene unit content) can be measured by infrared absorption spectrometry.
SBR products manufactured or sold by Sumitomo Chemical Co., Ltd., JSR Corporation, Asahi Kasei Corporation, Zeon Corporation, etc. may be used as the SBR.
The SBR may be either unmodified or modified SBR.
Examples of the modified SBR include SBR having the above-mentioned functional groups.
In the rubber composition forming the tread rubber 2G, the isoprene-based rubber content (the amount (% by mass) of isoprene-based rubbers based on 100% by mass of the rubber components) and the styrene-butadiene rubber content (the amount (% by mass) of styrene-butadiene rubbers based on 100% by mass of the rubber components) satisfy the following relationship (1):

(1) Isoprene-based rubber content > Styrene-butadiene rubber content.

The ratio of "Isoprene-based rubber content/Styrene-butadiene rubber content" is preferably 1.7 or higher, more preferably 2.0 or higher, still more preferably 2.4 or higher, further preferably 3.0 or higher, further preferably 3.5 or higher, particularly preferably 4.0 or higher, most preferably 4.7 or higher. The upper limit is preferably 8.0 or lower, more preferably 7.0 or lower, still more preferably 6.5 or lower, particularly preferably 6.0 or lower. When the ratio is within the range indicated above, the advantageous effect tends to be better achieved.

In the rubber composition forming the tread rubber 2G, the isoprene-based rubber content (the amount (% by mass) of isoprene-based rubbers based on 100% by mass of the rubber components) and the polybutadiene rubber content (the amount (% by mass) of polybutadiene rubbers based on 100% by mass of the rubber components) satisfy the following relationship (2):

(2) Isoprene-based rubber content > Polybutadiene rubber content.

The ratio of "Isoprene-based rubber content/Polybutadiene rubber content" is preferably 2.0 or higher, more preferably 2.5 or higher, still more preferably 3.0 or higher, further preferably 4.0 or higher, particularly preferably 4.7 or higher. The upper limit is preferably 8.0 or lower, more preferably 7.0 or lower, still more preferably 6.5 or lower, particularly preferably 6.0 or lower. When the ratio is within the range indicated above, the advantageous effect tends to be better achieved.

In the rubber composition forming the tread rubber 2G, the isoprene-based rubber content based on 100% by mass of the rubber components is preferably 40% by mass or more, more preferably 50% by mass or more, still more preferably 55% by mass or more, particularly preferably 60% by mass or more. The upper limit of the isoprene-based rubber content is not limited, but is preferably 90% by mass or less, more preferably 80% by mass or less, still more preferably 75% by mass or less, particularly preferably 70% by mass or less. When the isoprene-based rubber content is within the range indicated above, the advantageous effect tends to be better achieved.

In the rubber composition forming the tread rubber 2G, the BR content based on 100% by mass of the rubber components is preferably 5% by mass or more, more preferably 10% by mass or more, still more preferably 15% by mass or more, particularly preferably 20% by mass or more. Moreover, the upper limit of the BR content is not limited, but is preferably 35% by mass or less, more preferably 30% by mass or less, still more preferably 25% by mass or less. When the BR content is within the range indicated above, the advantageous effect tends to be better achieved.

In the rubber composition forming the tread rubber 2G, the SBR content based on 100% by mass of the rubber components is preferably 5% by mass or more, more preferably 10% by mass or more, still more preferably 15% by mass or more, particularly preferably 20% by mass or more. Moreover, the upper limit of the SBR content is not limited, but is preferably 35% by mass or less, more preferably 30% by mass or less, still more preferably 25% by mass or less. When the SBR content is within the range indicated above, the advantageous effect tends to be better achieved.

The rubber composition forming the tread rubber 2G contains fillers including silica and carbon black, and the silica content (the amount (parts by mass) of silica per 100 parts by mass of the rubber components) and the carbon black content (the amount (parts by mass) of carbon black per 100 parts by mass of the rubber components) satisfy the following relationship (3):

(3) Silica content ≥ Carbon black content.

The ratio of "Silica content/Carbon black content" is preferably 1.2 or higher, more preferably 1.5 or higher, still more preferably 1.8 or higher, particularly preferably 2.0 or higher. The upper limit is preferably 5.0 or lower, more preferably 4.0 or lower, still more preferably 3.5 or lower, particularly preferably 3.0 or lower. When the ratio is within the range indicated above, the advantageous effect tends to be better achieved.

Examples of the silica include dry silica (anhydrous silica) and wet silica (hydrous silica). These may be used alone or in combinations of two or more. Wet silica is preferred among these because it has a large number of silanol groups.

The average primary particle size of the silica is preferably 25 nm or less, more preferably 20 nm or less, still more preferably 17 nm or less, particularly preferably 14 nm or less. The lower limit of the average primary particle size is not limited, but is preferably 3 nm or more, more preferably 5 nm or more, still more preferably 7 nm or more, particularly preferably 10 nm or more. When the average primary particle size is within the range indicated above, the advantageous

effect tends to be more suitably achieved.

The average primary particle size of the silica can be determined by measuring the sizes of at least 400 silica primary particles observed within the visual field of a transmission or scanning electron microscope and averaging the sizes.

In the rubber composition forming the tread rubber 2G, the silica content per 100 parts by mass of the rubber components is preferably 10 parts by mass or more, more preferably 20 parts by mass or more, still more preferably 25 parts by mass or more, further preferably 30 parts by mass or more. The silica content is preferably 100 parts by mass or less, more preferably 60 parts by mass or less, still more preferably 50 parts by mass or less, particularly preferably 40 parts by mass or less. When the silica content is within the range indicated above, the advantageous effect tends to be more suitably achieved.

The silica used may be commercially available, e.g., from Degussa, Rhodia, Tosoh Silica Corporation, Solvay Japan, Tokuyama Corporation, etc.

The rubber composition forming the tread rubber 2G preferably contains a silane coupling agent.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone or in combinations of two or more. To better achieve the advantageous effect, sulfide or mercapto silane coupling agents are preferred among these.

The silane coupling agent used may be commercially available, e.g., from Degussa, Momentive, Shin-Etsu Silicone, Tokyo Chemical Industry Co., Ltd., AZmax. Co., Dow Corning Toray Co., Ltd., etc.

In the rubber composition forming the tread rubber 2G, the silane coupling agent content per 100 parts by mass of the silica is preferably 3 parts by mass or more, more preferably 5 parts by mass or more, but is preferably 25 parts by mass or less, more preferably 20 parts by mass or less, still more preferably 15 parts by mass or less. When the silane coupling agent content is within the range indicated above, the advantageous effect tends to be better achieved.

Any carbon black may be used in the rubber composition forming the tread rubber 2G. Examples include N134, N110, N220, N234, N219, N339, N330, N326, N351, N550, and N762. Usable commercial products are available from Asahi Carbon Co., Ltd, Cabot Japan K.K., Tokai Carbon Co., Ltd., Mitsubishi Chemical Corporation, Lion Corporation, NIPPON STEEL Carbon Co., Ltd., Columbia Carbon, etc. These may be used alone or in combinations of two or more.

The nitrogen adsorption specific surface area ($N_2SA$) of the carbon black is preferably 50 $m^2/g$ or more, more preferably 70 $m^2/g$ or more, still more preferably 90 $m^2/g$ or more. The $N_2SA$ is also preferably 200 $m^2/g$ or less, more preferably 150 $m^2/g$ or less, still more preferably 130 $m^2/g$ or less. When the $N_2SA$ is within the range indicated above, the advantageous effect tends to be better achieved.

Herein, the nitrogen adsorption specific surface area of the carbon black is determined in accordance with JIS K6217-2:2001.

In the rubber composition forming the tread rubber 2G, the carbon black content per 100 parts by mass of the rubber components is preferably 5 parts by mass or more, more preferably 15 parts by mass or more, still more preferably 20 parts by mass or more, further preferably 25 parts by mass or more. The carbon black content is preferably 80 parts by mass or less, more preferably 50 parts by mass or less, still more preferably 40 parts by mass or less, particularly preferably 30 parts by mass or less. When the carbon black content is within the range indicated above, the advantageous effect tends to be more suitably achieved.

The rubber composition forming the tread rubber 2G may contain additional fillers other than silica and carbon black. The additional fillers may be any filler, including materials known in the rubber field. Examples include inorganic fillers such as calcium carbonate, talc, alumina, clay, aluminum hydroxide, aluminum oxide, and mica.

In the rubber composition forming the tread rubber 2G, the filler content (the total amount of fillers) per 100 parts by mass of the rubber components is preferably 30 parts by mass or more, more preferably 45 parts by mass or more, still more preferably 50 parts by mass or more, further preferably 55 parts by mass or more, particularly preferably 60 parts by mass or more. The upper limit of the filler content is preferably 150 parts by mass or less, more preferably 100 parts by mass or less, still more preferably 90 parts by mass or less, particularly preferably 80 parts by mass or less. When the filler content is within the range indicated above, the advantageous effect tends to be better achieved.

The percentage of silica based on 100% by mass of the fillers in the rubber composition is preferably 40% by mass or higher, more preferably 50% by mass or higher, still more preferably 52% by mass or higher, particularly preferably 54% by mass or higher. The upper limit is not limited, but is preferably 80% by mass or lower, more preferably 70% by mass or lower, still more preferably 60% by mass or lower. When the percentage is within the range indicated above, the advantageous effect tends to be better achieved.

The rubber composition forming the tread rubber 2G may contain a plasticizer.

Herein, the term "plasticizer" refers to a material which can impart plasticity to rubber components. Examples include liquid plasticizers (plasticizers which are liquid at 25°C) and solid plasticizers (plasticizers which are solid at 25°C). These may be used alone or in combinations of two or more.

In the rubber composition forming the tread rubber 2G, the plasticizer content (the combined amount of liquid plasticizers and solid plasticizers) per 100 parts by mass of the rubber components is preferably 15 parts by mass or less, more preferably 10 parts by mass or less, still more preferably 5 parts by mass or less, particularly preferably 1 part by mass or less, and may be 0 parts by mass.

Herein, the plasticizer content includes the amount of the oils contained in the rubbers (oil extended rubbers) or sulfur (oil-containing sulfur), if used.

Examples of liquid plasticizers include oils, liquid polymers (e.g., liquid resins, liquid diene polymers), essential oils derived from natural products such as turpentine oil, and ester plasticizers. Examples of solid plasticizers include solid resins usually used in the tire industry which are solid at 25°C. These may be used alone or in combinations of two or more.

Any oil may be used, including conventionally known oils, examples of which include process oils such as paraffinic process oils, aromatic process oils, and naphthenic process oils, and low polycyclic aromatic (PCA) process oils such as TDAE and MES, vegetable oils, and mixtures of the foregoing. Examples of liquid resins include terpene resins (including terpene phenol resins and aromatic modified terpene resins), rosin resins, styrene resins, C5 resins, C5/C9 resins, coumarone-indene resins (including resins based on coumarone or indene alone), olefin resins, polyurethane resins, and acrylic resins, all of which are liquid at 25°C. Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadienestyrene block copolymers (liquid SBS block polymers), and liquid styrene-isoprene-styrene block copolymers (liquid SIS block polymers), all of which are liquid at 25°C.

In the rubber composition forming the tread rubber 2G, the liquid plasticizer content per 100 parts by mass of the rubber components is preferably less than 15 parts by mass, more preferably less than 10 parts by mass, still more preferably less than 5 parts by mass, particularly preferably less than 1 part by mass, and may be 0 parts by mass. Herein, the liquid plasticizer content includes the amount of the oils contained in the rubbers (oil extended rubbers) or sulfur (oil-containing sulfur), if used. The oil content is also desirably within the range as indicated above.

Examples of solid plasticizers include solid resins usually used as tire compounding materials. Specific examples include resins such as terpene resins, rosin resins, styrene resins, olefin resins, C5 resins, C9 resins, C5/C9 resins, coumarone resins, indene resins, coumarone-indene resins, acrylic resins, and urethane resins. These may be used alone or as a mixture of two or more thereof. Also usable are resins which themselves are copolymers of multiple types of monomer components.

In the rubber composition forming the tread rubber 2G, the solid plasticizer content per 100 parts by mass of the rubber components is preferably 5 parts by mass or more, more preferably 10 parts by mass or more, still more preferably 15 parts by mass or more. Moreover, the upper limit of the solid plasticizer content is not limited, but is preferably 35 parts by mass or less, more preferably 30 parts by mass or less, still more preferably 25 parts by mass or less. The resin content is also desirably within the range as indicated above.

The rubber composition forming the tread rubber 2G preferably contains sulfur.

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

In the rubber composition forming the tread rubber 2G, the sulfur content per 100 parts by mass of the rubber components is preferably 0.1 parts by mass or more, more preferably 0.5 parts by mass or more, still more preferably 0.8 parts by mass or more, particularly preferably 1.5 parts by mass or more. The sulfur content is also preferably 10 parts by mass or less, more preferably 7 parts by mass or less, still more preferably 5 parts by mass or less, particularly preferably 3 parts by mass or less, most preferably 2 parts by mass or less. When the sulfur content is within the range indicated above, the advantageous effect tends to be better achieved.

The rubber composition forming the tread rubber 2G preferably contains a vulcanization accelerator.

Examples of vulcanization accelerators include thiazole vulcanization accelerators such as 2-mercaptobenzothiazole and di-2-benzothiazolyl disulfide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazolylsulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide vulcanization accelerators are preferred among these.

In the rubber composition forming the tread rubber 2G, the vulcanization accelerator content per 100 parts by mass of the rubber components is preferably 0.5 parts by mass or more, more preferably 1 part by mass or more, but is preferably 10 parts by mass or less, more preferably 5 parts by mass or less.

The rubber composition forming the tread rubber 2G preferably contains stearic acid.

In the rubber composition forming the tread rubber 2G, the stearic acid content per 100 parts by mass of the rubber components is preferably 0.5 parts by mass or more, more preferably 1 part by mass or more. The stearic acid content is also preferably 5 parts by mass or less, more preferably 3 parts by mass or less.

The rubber composition forming the tread rubber 2G may contain zinc oxide.

The zinc oxide content per 100 parts by mass of the rubber components is preferably 0.5 parts by mass or more, more preferably 1 part by mass or more, but is preferably 10 parts by mass or less, more preferably 5 parts by mass or less.

The rubber composition forming the tread rubber 2G may contain an antioxidant.

Examples of antioxidants include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone or in combinations of two or more. Preferred among these are p-phenylenediamine or quinoline antioxidants, with p-phenylenediamine antioxidants being more preferred.

In the rubber composition forming the tread rubber 2G, the antioxidant content per 100 parts by mass of the rubber components is preferably 0.5 parts by mass or more, more preferably 1 part by mass or more, but is preferably 10 parts by mass or less, more preferably 5 parts by mass or less.

The rubber composition forming the tread rubber 2G may contain a wax.

Non-limiting examples of waxes include petroleum waxes such as paraffin waxes and microcrystalline waxes; natural waxes such as plant waxes and animal waxes; and synthetic waxes such as polymers of ethylene, propylene, or other similar monomers. These may be used alone or in combinations of two or more.

In the rubber composition forming the tread rubber 2G, the wax content per 100 parts by mass of the rubber components is preferably 0.5 parts by mass or more, more preferably 1 part by mass or more. The wax content is also preferably 10 parts by mass or less, more preferably 7 parts by mass or less.

The rubber composition forming the tread rubber 2G may contain additives commonly used in the tire industry, in addition to the above-mentioned components. Examples include vulcanizing agents other than sulfur (e.g., organic crosslinking agents, organic peroxides). The amounts of such components are each preferably 0.1 parts by mass or more, but preferably 200 parts by mass or less, per 100 parts by mass of the rubber components.

The rubber composition forming the tread rubber 2G may be prepared, for example, by kneading the components in a rubber kneading machine such as an open roll mill or a Banbury mixer and then vulcanizing the kneaded mixture.

The kneading conditions are as follows. In a base kneading step of kneading additives other than crosslinking agents (vulcanizing agents) and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 80 to 110°C. Then, the composition obtained after kneading vulcanizing agents and vulcanization accelerators is usually vulcanized by press vulcanization, for example. The vulcanization temperature is usually 140 to 190°C, preferably 150 to 185°C.

The rubber composition forming the tread rubber 2G has a tan δ at 30°C that satisfies the following relationship (4):

$$(4)\quad \tan\delta \text{ at } 30^{\circ}\text{C} < 0.10.$$

The tan δ at 30°C is preferably 0.09 or less, more preferably 0.08 or less, still more preferably 0.07 or less, particularly preferably 0.06 or less, most preferably 0.05 or less. The lower limit is not limited, but is preferably 0.01 or more, more preferably 0.02 or more. When the tan δ at 30°C is within the range indicated above, the advantageous effect tends to be better achieved.

Herein, the term "tan δ at 30°C" refers to the loss tangent measured under conditions including a temperature of 30°C, an initial strain of 5%, a dynamic strain of 1%, a frequency of 10 Hz, and an extension mode. Moreover, the

tan δ at 30°C of the rubber composition means the tan δ at 30°C of the rubber composition which has been vulcanized, and may be determined by viscoelastic testing of the vulcanized rubber composition.

The tan δ at 30°C can be controlled by the types and amounts of chemicals (in particular, rubber components, fillers, plasticizers, sulfur, vulcanization accelerators, silane coupling agents) compounded into the rubber composition. For example, increasing the isoprene-based rubber content, reducing the filler content, or reducing the liquid plasticizer content tends to reduce the tan δ.

The tan δ at 30°C of the rubber composition forming the tread rubber 2G and the negative ratio N (%) of the tread rubber 2G satisfy the following relationship (5):

$$(5)\ \tan\delta \text{ at } 30°C \times N < 4.0.$$

The value of "tan δ at 30°C × N" is preferably 3.6 or less, more preferably 2.8 or less, still more preferably 2.7 or less, further preferably 2.4 or less, particularly preferably 2.0 or less, most preferably 1.8 or less. The lower limit is not limited, but is preferably 0.5 or more, more preferably 1.0 or more, still more preferably 1.2 or more, further preferably 1.4 or more, particularly preferably 1.5 or more. When the value is within the range indicated above, the advantageous effect tends to be better achieved.

To better achieve the advantageous effect, the negative ratio (N) of the tread rubber 2G desirably satisfies the following relationship:

$$N \leq 50\%.$$

N is preferably 45% or lower, more preferably 40% or lower, still more preferably 35% or lower, particularly preferably 30% or lower. The lower limit is not limited, but is preferably 5% or higher, more preferably 15% or higher, still more preferably 20% or higher. When N is within the range indicated above, the advantageous effect tends to be better achieved.

Here, the negative ratio (negative ratio within the ground contact surface of the tread portion) refers to the ratio of the total groove area within the ground contact surface to the total area of the ground contact surface and is determined as described below.

Herein, when the tire is a pneumatic tire, the negative ratio is calculated from the contact patch of the tire under conditions including a normal rim, a normal internal pressure, and a normal load. In the case of a non-pneumatic tire, the negative ratio can be similarly determined without the need of the normal internal pressure.

The terms "normal rim" and "normal internal pressure" are as described above, and the term "normal load" is as described later.

The contact patch may be determined by mounting the tire on a normal rim, applying a normal internal pressure to the tire, and allowing the tire to stand at 25°C for 24 hours, followed by applying black ink to the tread surface of the tire and pressing it against a cardboard at a normal load (camber angle: 0°) for transfer to the cardboard.

The transfer may be performed on the tire in five positions rotated by 72 degrees relative to one another in the circumferential direction. Namely, the contact patch may be determined five times.

The average of the largest lengths in the tire axial direction of the five contact patches is denoted as L, and the average of the lengths in the direction orthogonal to the axial direction thereof is denoted as W.

The negative ratio (%) is calculated by the equation:

$$[1 - \{\text{Average of areas of five contact patches transferred to cardboard (parts with black ink)}\}/(L \times W)] \times 100\ (\%).$$

Here, the average length and the average area are each the simple average of the five values.

The tire 1 according to this embodiment includes a carcass 6 extending between the pair of bead portions 4, 4, and a belt layer 7 located at the tread portion 2.

The carcass 6 includes at least one carcass ply (in this embodiment, a first carcass ply 6A and a second carcass ply 6B stacked on the first carcass ply 6A). In this embodiment, the first carcass ply 6A is located radially inwardly (with respect to the tire) of the second carcass ply 6B. However, the first carcass ply 6A may be located radially outwardly of the second carcass ply 6B.

In this embodiment, the carcass plies 6A and 6B each include a body portion 6a and a pair of folded portions 6b, 6b. The body portion 6a extends from the tread portion 2 to the bead cores 5 of the pair of bead portions 4, 4 via the pair of sidewall portions 3, 3, respectively. Each folded portion 6b is connected to the body portion 6a and is folded

around the bead core 5 from the inside to the outside in the tire axial direction. In this embodiment, each folded portion 6b has a radially outer end 6o which ends at the sidewall portion 3. Moreover, for example, each folded portion 6b is provided with an internal portion 6i which is inclined axially inwardly and radially outwardly from the bead core 5, and an external portion 6e which is connected to the internal portion 6i and which is inclined axially outwardly and radially outwardly. However, each folded portion 6b is not limited to such an embodiment.

For example, the carcass plies 6A and 6B are each formed by coating a carcass cord (not shown) with a topping rubber. The carcass cord in this embodiment is arranged at an angle of, for example, 75° to 90° relative to the tire equator C. The carcass cord may be a metal fiber cord such as a steel cord, or an organic fiber cord such as a polyester cord, a nylon cord, a rayon cord, or an aramid cord.

The belt layer 7 includes at least one belt ply (in this embodiment, two belt plies, an inner belt ply 7A and an outer belt ply 7B, which are respectively located radially inward and outward). The belt plies 7A and 7B each include a belt cord (not shown) which is arranged at an angle of, for example, 10° to 35° relative to the tire equator C. The belt plies 7A and 7B are stacked in such an orientation that the belt cord of one crosses the belt cord of the other. The belt cord is suitably, for example, a steel cord, although it may also be an organic fiber cord with high elasticity, such as an aramid cord or a rayon cord.

In this embodiment, the inner belt ply 7A is formed with a larger width than the outer belt ply 7B. The width Wa in the tire axial direction of the inner belt ply 7A is desirably 80% to 100% of the tread width TW. However, for example, the inner belt ply 7A may be narrower than the outer belt ply 7B.

The term "tread width TW" refers to the distance in the tire axial direction between the tread edges Te, Te. The term "tread edge Te" refers to the axially outermost contact position of the tire 1 determined when a normal load is applied to the tire 1 in the above-described normal state and contacted with a plane at a camber angle of 0 degrees.

Herein, the term "normal load" refers to a load specified for each tire by the standards in a standard system including standards according to which tires are provided, and may be "maximum load capacity" in JATMA, a maximum value shown in Table "TIRE LOAD LIMITS AT VARIOUS COLD INFLATION PRESSURES" in TRA, or "load capacity" in ETRTO.

The pair of bead portions 4, 4 are each provided with a bead apex rubber 8.

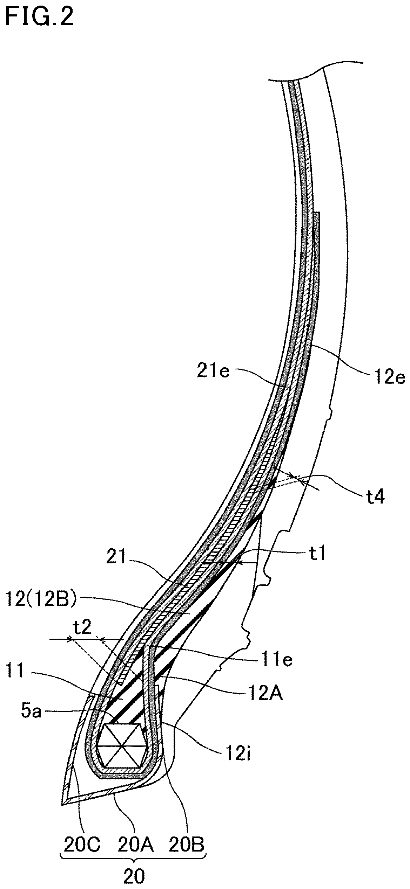

Fig. 2 is an enlarged view of Fig. 1. As shown in Fig. 2, the bead apex rubber 8 in this embodiment has a two-layer structure including an apex 11 and a bead-reinforcing rubber 12. For example, the apex 11 extends radially outwardly from the radially outer surface 5a of the bead core 5. For example, the bead-reinforcing rubber 12 is located more axially outward than the apex 11.

The tire 1 is desirably a tire including a bead-reinforcing rubber. The term "bead-reinforcing rubber" refers to a component having the function of reinforcing a bead portion. Although this embodiment shows a structure in which the carcass 6 is sandwiched between the apex 11 and the bead-reinforcing rubber 12, a two-layer structure may be provided in which the bead-reinforcing rubber 12 is located adjacent to and axially outwardly of the apex 11. In such an exemplary embodiment, the bead-reinforcing rubber 12 is located adjacent to and axially outwardly of the apex 11, and the carcass 6 is located axially outwardly of the bead-reinforcing rubber 12 and extends radially. Alternatively, though not shown, a two-layer structure may be provided in which the bead-reinforcing rubber 12 is located adjacent to and axially outwardly of the clinch rubber 4G. The presence of the bead-reinforcing rubber 12 improves abrasion resistance.

The reason for this advantageous effect is not exactly clear, but is believed to be due to the following mechanism.

As described above, the tire satisfies relationships (1) to (5) to improve overall performance in terms of fuel economy, abrasion resistance, and handling stability. When the tire is further provided with a bead-reinforcing rubber such as the bead-reinforcing rubber 12, the folded portion 6b is prevented from excessively deforming axially outwardly, thereby providing excellent durability. Thus, the abrasion resistance is improved, and good handling stability is also provided. Accordingly, it is believed that the overall performance in terms of fuel economy, abrasion resistance, and handling stability can be significantly improved.

Examples of rubber components which may be used in the rubber composition forming the bead-reinforcing rubber 12 include those similar to the above-mentioned rubber components which may be used in the rubber composition forming the tread rubber 2G. These may be used alone or in combinations of two or more. To better achieve the advantageous effect, isoprene-based rubbers and BR are preferred, with combinations of isoprene-based rubbers and BR being more preferred.

To better achieve the advantageous effect, the isoprene-based rubber content (the amount (% by mass) of isoprene-based rubbers based on 100% by mass of the rubber components) of the rubber composition forming the bead-reinforcing rubber 12 is preferably 20% by mass or more, more preferably 30% by mass or more, but is preferably 60% by mass or less, more preferably 50% by mass or less, still more preferably 40% by mass or less.

To better achieve the advantageous effect, the BR content (the amount (% by mass) of BR based on 100% by mass of the rubber components) of the rubber composition forming the bead-reinforcing rubber 12 is preferably 40% by mass or more, more preferably 50% by mass or more, still more preferably 60% by mass or more, but is preferably 80% by mass or less, more preferably 70% by mass or less.

The rubber composition forming the bead-reinforcing rubber 12 may contain silica.

Examples of silica which may be used in the rubber composition forming the bead-reinforcing rubber 12 include those similar to the above-mentioned silica which may be used in the rubber composition forming the tread rubber 2G. The amount thereof is also as described above for the rubber composition forming the tread rubber 2G.

The rubber composition forming the bead-reinforcing rubber 12 may contain a silane coupling agent.

Examples of silane coupling agents which may be used in the rubber composition forming the bead-reinforcing rubber 12 include those similar to the above-mentioned silane coupling agents which may be used in the rubber composition forming the tread rubber 2G. The amount thereof is also as described above for the rubber composition forming the tread rubber 2G.

The rubber composition forming the bead-reinforcing rubber 12 preferably contains carbon black.

Examples of carbon black which may be used in the rubber composition forming the bead-reinforcing rubber 12 include those similar to the above-mentioned carbon black which may be used in the rubber composition forming the tread rubber 2G.

The nitrogen adsorption specific surface area ($N_2SA$) of the carbon black used in the rubber composition forming the bead-reinforcing rubber 12 is preferably 50 $m^2/g$ or more, more preferably 70 $m^2/g$ or more, but is preferably 150 $m^2/g$ or less, more preferably 130 $m^2/g$ or less. When the $N_2SA$ is within the range indicated above, the advantageous effect tends to be better achieved.

In the rubber composition forming the bead-reinforcing rubber 12, the carbon black content per 100 parts by mass of the rubber components is preferably 40 parts by mass or more, more preferably 50 parts by mass or more, still more preferably 58 parts by mass or more, particularly preferably 70 parts by mass or more, but is preferably 120 parts by mass or less, more preferably 100 parts by mass or less, still more preferably 90 parts by mass or less, particularly preferably 75 parts by mass or less. When the carbon black content is within the range indicated above, the advantageous effect tends to be more suitably achieved.

The rubber composition forming the bead-reinforcing rubber 12 may contain additional fillers other than silica and carbon black. Examples of additional fillers which may be used in the rubber composition forming the bead-reinforcing rubber 12 include those similar to the above-mentioned additional fillers which may be used in the rubber composition forming the tread rubber 2G.

In the rubber composition forming the bead-reinforcing rubber 12, the filler content (the total amount of fillers) is as described above for the filler content of the rubber composition forming the tread rubber 2G.

The rubber composition forming the bead-reinforcing rubber 12 preferably contains a plasticizer.

Examples of plasticizers which may be used in the rubber composition forming the bead-reinforcing rubber 12 include those similar to the above-mentioned plasticizers which may be used in the rubber composition forming the tread rubber 2G.

In the rubber composition forming the bead-reinforcing rubber 12, the plasticizer content (the combined amount of liquid plasticizers and solid plasticizers) per 100 parts by mass of the rubber components is preferably 1 part by mass or more, more preferably 3 parts by mass or more, still more preferably 5 parts by mass or more, particularly preferably 15 parts by mass or more. The plasticizer content is also preferably 30 parts by mass or less, more preferably 20 parts by mass or less, still more preferably 18 parts by mass or less, particularly preferably 17 parts by mass or less. When the plasticizer content is within the range indicated above, the advantageous effect tends to be more suitably achieved.

In the rubber composition forming the bead-reinforcing rubber 12, the liquid plasticizer content per 100 parts by mass of the rubber components is preferably 1 part by mass or more, more preferably 3 parts by mass or more, still more preferably 5 parts by mass or more, particularly preferably 15 parts by mass or more. The liquid plasticizer content is also preferably 30 parts by mass or less, more preferably 20 parts by mass or less, still more preferably 18 parts by mass or less, particularly preferably 17 parts by mass or less. When the liquid plasticizer content is within the range indicated above, the advantageous effect tends to be more suitably achieved.

The rubber composition forming the bead-reinforcing rubber 12 preferably contains sulfur.

Examples of sulfur which may be used in the rubber composition forming the bead-reinforcing rubber 12 include those similar to the above-mentioned sulfur which may be used in the rubber composition forming the tread rubber 2G. The amount thereof is also as described above for the rubber composition forming the tread rubber 2G.

The rubber composition forming the bead-reinforcing rubber 12 preferably contains a vulcanization accelerator.

Examples of vulcanization accelerators which may be used in the rubber composition forming the bead-reinforcing rubber 12 include those similar to the above-mentioned vulcanization accelerators which may be used in the rubber composition forming the tread rubber 2G. The amount thereof is also as described above for the rubber composition forming the tread rubber 2G.

The rubber composition forming the bead-reinforcing rubber 12 preferably contains stearic acid.

Examples of stearic acid which may be used in the rubber composition forming the bead-reinforcing rubber 12 include those similar to the above-mentioned stearic acid which may be used in the rubber composition forming the tread rubber 2G. The amount thereof is also as described above for the rubber composition forming the tread rubber 2G.

The rubber composition forming the bead-reinforcing rubber 12 may contain zinc oxide.

In the rubber composition forming the bead-reinforcing rubber 12, the zinc oxide content is as described above for the zinc oxide content of the rubber composition forming the tread rubber 2G.

The rubber composition forming the bead-reinforcing rubber 12 may contain an antioxidant.

Examples of antioxidants which may be used in the rubber composition forming the bead-reinforcing rubber 12 include those similar to the above-mentioned antioxidants which may be used in the rubber composition forming the tread rubber 2G. The amount thereof is also as described above for the rubber composition forming the tread rubber 2G.

The rubber composition forming the bead-reinforcing rubber 12 may contain a wax.

Examples of waxes which may be used in the rubber composition forming the bead-reinforcing rubber 12 include those similar to the above-mentioned waxes which may be used in the rubber composition forming the tread rubber 2G. The amount thereof is also as described above for the rubber composition forming the tread rubber 2G.

The rubber composition forming the bead-reinforcing rubber 12 may contain additives commonly used in the tire industry, in addition to the above-mentioned components. Examples include vulcanizing agents other than sulfur (e.g., organic crosslinking agents, organic peroxides). The amounts of such components are each preferably 0.1 parts by mass or more, but preferably 200 parts by mass or less, per 100 parts by mass of the rubber components.

The rubber composition forming the bead-reinforcing rubber 12 may be prepared as described above for the rubber composition forming the tread rubber 2G.

To better achieve the advantageous effect, the complex modulus E1* (MPa) at 30°C of the tread rubber 2G and the complex modulus E2* (MPa) at 70°C of the bead-reinforcing rubber 12 desirably satisfy the following relationship:

$$E2^*/E1^* > 0.3.$$

The ratio of "E2*/E1*" is preferably 0.5 or higher, more preferably 0.7 or higher, still more preferably 1.0 or higher, further preferably 1.2 or higher, particularly preferably 2.0 or higher, most preferably 2.8 or higher. The upper limit is preferably 5.0 or lower, more preferably 4.0 or lower, still more preferably 3.5 or lower. When the ratio is within the range indicated above, the advantageous effect tends to be better achieved.

The complex modulus E1* at 30°C of the tread rubber 2G is preferably 2.0 MPa or more, more preferably 3.5 MPa or more, still more preferably 3.6 MPa or more, further preferably 4.0 MPa or more, particularly preferably 4.2 MPa or more. The upper limit is preferably 15.0 MPa or less, more preferably 10.0 MPa or less, still more preferably 8.0 MPa or less, particularly preferably 7.5 MPa or less, most preferably 7.1 MPa or less. When the E1* is within the range indicated above, the advantageous effect tends to be better achieved.

The complex modulus E2* at 70°C of the bead-reinforcing rubber 12 is preferably 3.0 MPa or more, more preferably 5.0 MPa or more, still more preferably 8.0 MPa or more, particularly preferably 10.0 MPa or more. The upper limit is preferably 30.0 MPa or less, more preferably 25.0 MPa or less, still more preferably 20.0 MPa or less. When the E2* is within the range indicated above, the advantageous effect tends to be better achieved.

In this embodiment, the apex 11 is sandwiched between each body portion 6a and each folded portion 6b of the carcass plies 6A, 6B. In this embodiment, the bead-reinforcing rubber 12 is located axially outwardly of each folded portion 6b. Thus, the carcass plies 6A, 6B in this embodiment extend between the apex 11 and the bead-reinforcing rubber 12.

For example, the radially outer end 12e of the bead-reinforcing rubber 12 is desirably located more radially outward than the radially outer end 11e of the apex 11.

Examples of rubber components which may be used in the rubber composition forming the apex 11 include those similar to the above-mentioned rubber components which may be used in the rubber composition forming the tread rubber 2G. These may be used alone or in combinations of two or more. To better achieve the advantageous effect, isoprene-based rubbers and SBR are preferred, with combinations of isoprene-based rubbers and SBR being more preferred.

To better achieve the advantageous effect, the isoprene-based rubber content (the amount (% by mass) of isoprene-based rubbers based on 100% by mass of the rubber components) of the rubber composition forming the apex 11 is preferably 50% by mass or more, more preferably 60% by mass or more, still more preferably 70% by mass or more, but is preferably 95% by mass or less, more preferably 90% by mass or less, still more preferably 85% by mass or less.

To better achieve the advantageous effect, the SBR content (the amount (% by mass) of SBR based on 100% by mass of the rubber components) of the rubber composition forming the apex 11 is preferably 5% by mass or more, more preferably 10% by mass or more, still more preferably 15% by mass or more, but is preferably 50% by mass or less, more preferably 40% by mass or less, still more preferably 30% by mass or less.

The rubber composition forming the apex 11 may contain silica.

Examples of silica which may be used in the rubber composition forming the apex 11 include those similar to

the above-mentioned silica which may be used in the rubber composition forming the tread rubber 2G. The amount thereof is also as described above for the rubber composition forming the tread rubber 2G.

The rubber composition forming the apex 11 may contain a silane coupling agent.

Examples of silane coupling agents which may be used in the rubber composition forming the apex 11 include those similar to the above-mentioned silane coupling agents which may be used in the rubber composition forming the tread rubber 2G. The amount thereof is also as described above for the rubber composition forming the tread rubber 2G.

The rubber composition forming the apex 11 preferably contains carbon black.

Examples of carbon black which may be used in the rubber composition forming the apex 11 include those similar to the above-mentioned carbon black which may be used in the rubber composition forming the tread rubber 2G.

The nitrogen adsorption specific surface area ($N_2SA$) of the carbon black used in the rubber composition forming the apex 11 is preferably 50 $m^2/g$ or more, more preferably 70 $m^2/g$ or more, but is preferably 150 $m^2/g$ or less, more preferably 130 $m^2/g$ or less. When the $N_2SA$ is within the range indicated above, the advantageous effect tends to be better achieved.

In the rubber composition forming the apex 11, the carbon black content per 100 parts by mass of the rubber components is preferably 60 parts by mass or more, more preferably 70 parts by mass or more, still more preferably 75 parts by mass or more, but is preferably 100 parts by mass or less, more preferably 95 parts by mass or less, still more preferably 90 parts by mass or less, particularly preferably 85 parts by mass or less. When the carbon black content is within the range indicated above, the advantageous effect tends to be more suitably achieved.

The rubber composition forming the apex 11 may contain additional fillers other than silica and carbon black. Examples of additional fillers which may be used in the rubber composition forming the apex 11 include those similar to the above-mentioned additional fillers which may be used in the rubber composition forming the tread rubber 2G.

In the rubber composition forming the apex 11, the filler content (the total amount of fillers) is as described above for the filler content of the rubber composition forming the tread rubber 2G.

The rubber composition forming the apex 11 preferably contains a plasticizer.

Examples of plasticizers which may be used in the rubber composition forming the apex 11 include those similar to the above-mentioned plasticizers which may be used in the rubber composition forming the tread rubber 2G.

In the rubber composition forming the apex 11, the plasticizer content (the combined amount of liquid plasticizers and solid plasticizers) per 100 parts by mass of the rubber components is preferably 1 part by mass or more, more preferably 3 parts by mass or more, still more preferably 4 parts by mass or more. The plasticizer content is also preferably 30 parts by mass or less, more preferably 20 parts by mass or less, still more preferably 15 parts by mass or less, particularly preferably 10 parts by mass or less. When the plasticizer content is within the range indicated above, the advantageous effect tends to be more suitably achieved.

In the rubber composition forming the apex 11, the liquid plasticizer content per 100 parts by mass of the rubber components is preferably 1 part by mass or more, more preferably 3 parts by mass or more, still more preferably 4 parts by mass or more. The liquid plasticizer content is also preferably 30 parts by mass or less, more preferably 20 parts by mass or less, still more preferably 15 parts by mass or less, particularly preferably 10 parts by mass or less. When the liquid plasticizer content is within the range indicated above, the advantageous effect tends to be more suitably achieved.

To better achieve the advantageous effect, the rubber composition forming the apex 11 preferably contains a phenol resin. The phenol resin is preferably a cashew oil-modified phenol resin. The cashew oil-modified phenol resin may suitably be one represented by the following formula (1):

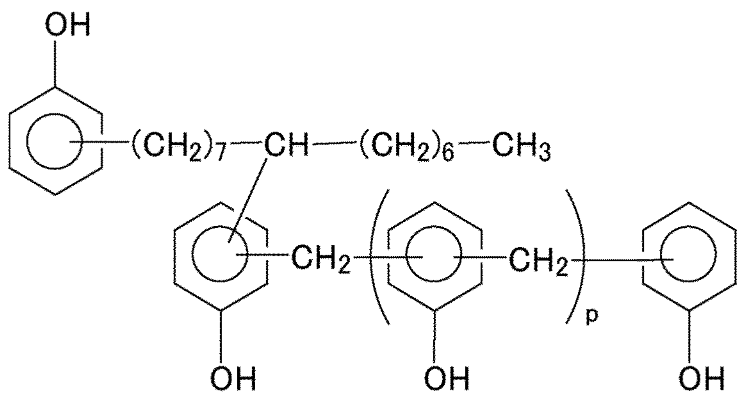

(1)

wherein p is an integer of 1 to 9, preferably 5 or 6, in order to provide good reactivity and improved dispersion.

To better achieve the advantageous effect, the phenol resin content per 100 parts by mass of the rubber components in the rubber composition forming the apex 11 is preferably 3 parts by mass or more, more preferably 5

parts by mass or more, still more preferably 10 parts by mass or more, particularly preferably 15 parts by mass or more. The phenol resin content is also preferably 100 parts by mass or less, more preferably 90 parts by mass or less, still more preferably 85 parts by mass or less, particularly preferably 65 parts by mass or less.

The rubber composition forming the apex 11 preferably contains a curing agent capable of curing a phenol resin or the like.

Any curing agent having the above curing ability may be used. Examples include hexamethylenetetramine (HMT), hexamethoxymethylol melamine (HMMM), hexamethoxymethylol pentamethyl ether (HMMPME), melamine, and methylol melamine. HMT, HMMM, and HMMPME are preferred among these because they are highly capable of increasing the hardness of phenol resins.

To better achieve the advantageous effect, the curing agent content per 100 parts by mass of the phenol resins in the rubber composition forming the apex 11 is preferably 2 parts by mass or more, more preferably 5 parts by mass or more, still more preferably 10 parts by mass or more, but is preferably 20 parts by mass or less, more preferably 15 parts by mass or less.

The rubber composition forming the apex 11 preferably contains sulfur.

Examples of sulfur which may be used in the rubber composition forming the apex 11 include those similar to the above-mentioned sulfur which may be used in the rubber composition forming the tread rubber 2G. The amount thereof is also as described above for the rubber composition forming the tread rubber 2G.

The rubber composition forming the apex 11 preferably contains a vulcanization accelerator.

Examples of vulcanization accelerators which may be used in the rubber composition forming the apex 11 include those similar to the above-mentioned vulcanization accelerators which may be used in the rubber composition forming the tread rubber 2G. The amount thereof is also as described above for the rubber composition forming the tread rubber 2G.

The rubber composition forming the apex 11 preferably contains stearic acid.

Examples of stearic acid which may be used in the rubber composition forming the apex 11 include those similar to the above-mentioned stearic acid which may be used in the rubber composition forming the tread rubber 2G. The amount thereof is also as described above for the rubber composition forming the tread rubber 2G.

The rubber composition forming the apex 11 may contain zinc oxide.

In the rubber composition forming the apex 11, the zinc oxide content is as described above for the zinc oxide content of the rubber composition forming the tread rubber 2G.

The rubber composition forming the apex 11 may contain an antioxidant.

Examples of antioxidants which may be used in the rubber composition forming the apex 11 include those similar to the above-mentioned antioxidants which may be used in the rubber composition forming the tread rubber 2G. The amount thereof is also as described above for the rubber composition forming the tread rubber 2G.

The rubber composition forming the apex 11 may contain a wax.

Examples of waxes which may be used in the rubber composition forming the apex 11 include those similar to the above-mentioned waxes which may be used in the rubber composition forming the tread rubber 2G. The amount thereof is also as described above for the rubber composition forming the tread rubber 2G.

The rubber composition forming the apex 11 may contain additives commonly used in the tire industry, in addition to the above-mentioned components. Examples include vulcanizing agents other than sulfur (e.g., organic crosslinking agents, organic peroxides). The amounts of such components are each preferably 0.1 parts by mass or more, but preferably 200 parts by mass or less, per 100 parts by mass of the rubber components.

The rubber composition forming the apex 11 may be prepared as described above for the rubber composition forming the tread rubber 2G.

To better achieve the advantageous effect, the complex modulus E3* at 70°C of the apex 11 and the complex modulus E2* at 70°C of the bead-reinforcing rubber 12 desirably satisfy the following relationship:

$$E3^* > E2^*.$$

The ratio of "E3*/E2*" is preferably 3.0 or higher, more preferably 5.0 or higher, still more preferably 6.0 or higher, particularly preferably 7.0 or higher, most preferably 10.0 or higher. The upper limit is preferably 25.0 or lower, more preferably 15.0 or lower, still more preferably 13.0 or lower. When the ratio is within the range indicated above, the advantageous effect tends to be better achieved.

The complex modulus E3* at 70°C of the apex 11 is preferably 20 MPa or more, more preferably 50 MPa or more, still more preferably 56 MPa or more, further preferably 60 MPa or more, particularly preferably 65 MPa or more. The upper limit is preferably 200 MPa or less, more preferably 150 MPa or less, still more preferably 100 MPa or less, particularly preferably 80 MPa or less. When the E3* is within the range indicated above, the advantageous effect tends to be better achieved.

Herein, the term "E* at 70°C" refers to the loss tangent measured under conditions including a temperature of 70°C, an initial strain of 5%, a dynamic strain of 1%, a frequency of 10 Hz, and an extension mode. The term "E* at 30°C" refers to the loss tangent measured under conditions including a temperature of 30°C, an initial strain of 5%, a dynamic strain of 1%, a frequency of 10 Hz, and an extension mode. Moreover, the E* at 70°C of the rubber composition means the complex modulus at 70°C of the rubber composition which has been vulcanized, and the E* at 30°C of the rubber composition means the complex modulus at 30°C of the rubber composition which has been vulcanized. Each E* may be determined by viscoelastic testing of the vulcanized rubber composition.

The E* at 30°C or 70°C can be controlled by the types and amounts of chemicals (in particular, rubber components, fillers, plasticizers, sulfur, vulcanization accelerators) compounded into the rubber composition. For example, increasing the filler content or increasing the resin content tends to increase the E*.

For example, the bead-reinforcing rubber 12 is desirably provided with a first portion 12A which has an axial thickness t1 that gradually increases outwardly in the radial direction, and a second portion 12B which is connected to the first portion 12A and in which the thickness t1 gradually decreases outwardly in the radial direction. In this embodiment, the first portion 12A of the bead-reinforcing rubber 12 is in contact with the internal portion 6i of the folded portion 6b. In this embodiment, the second portion 12B of the bead-reinforcing rubber 12 is in contact with the external portion 6e of the folded portion 6b.

For example, the radially inner end 12i of the bead-reinforcing rubber 12 is desirably located more radially outward than the outer surface 5a of the bead core 5. In this embodiment, the inner end 12i of the bead-reinforcing rubber 12 is also desirably located more radially inward than the outer end 11e of the apex 11.

In this embodiment, the apex 11 is provided with a substantially triangle cross-sectional shape having an axial thickness t2 that gradually decreases outwardly in the radial direction from the outer surface 5a of the bead core 5. The outer end 11e of the apex 11 is desirably located in the vicinity of the radially outer end of the internal portion 6i of the folded portion 6b.

In this embodiment, for example, the outer end of the folded portion 6b of the first carcass ply 6A is radially spaced from the outer end of the folded portion 6b of the second carcass ply 6B.

In this embodiment, the outer end of the first carcass ply 6A and the outer end of the second carcass ply 6B are spaced radially inwardly and outwardly from a tire maximum width position M therebetween. In this embodiment, the outer end of the second carcass ply 6B is located more radially inward than the tire maximum width position M.

As shown in Fig. 2, the bead portion 4 in this embodiment is provided with a chafer rubber 20 for preventing rim slippage and a reinforcing member 21 for increasing the rigidity of the bead portion 4.

For example, the chafer rubber 20 is desirably formed in a thin sheet form having a thickness of approximately 0.5 to 1.5 mm. For example, the chafer rubber 20 is desirably formed from a hard rubber having excellent abrasion resistance. Although the chafer rubber 20 may be formed only of a rubber, a canvas fabric or aligned organic fiber cords, for example, may be embedded in a rubber to reinforce the rubber, thereby further enhancing abrasion resistance.

In this embodiment, the chafer rubber 20 is provided with a base portion 20A, an outer piece portion 20B, and an inner piece portion 20C. In this embodiment, the base portion 20A contacts a rim sheet surface (not shown) of a rim and extends in the tire axial direction. In this embodiment, the outer piece portion 20B is connected to the axially outer end of the base portion 20A and extends radially outwardly and then ends between the folded portion 6b and the bead-reinforcing rubber 12. In this embodiment, the inner piece portion 20C is connected to the axially inner end of the base portion 20A and extends radially outwardly along the inner cavity surface of the tire and then ends.

In this embodiment, the outer piece portion 20B ends at a position that is more radially inward than the outer end 11e of the apex 11 and between the internal portion 6i and the first portion 12A of the bead-reinforcing rubber 12. Such an outer piece portion 20B concentrates the strain during running in the vicinity of the tire maximum width position M.

In this embodiment, the reinforcing member 21 is connected to the apex 11 and extends radially outwardly. For example, the reinforcing member 21 is sandwiched between each body portion 6a and each folded portion 6b. The radially outer end 21e of the reinforcing member 21 is located more radially inward than the outer end 12e of the bead-reinforcing rubber 12.

For example, the reinforcing member 21 is desirably provided with a thickness t4 in the range of 0.5 to 3.0 mm.

In the tire 1, the grooves 26 of the tread rubber 2G include main grooves 42. As shown in Fig. 1, the tread rubber 2G has a plurality of, specifically three, main grooves 42 engraved thereon. The main grooves 42 are provided at intervals in the axial direction. Four ribs extending in the circumferential direction are defined by the three main grooves 42 engraved on the tread 4. Each main groove 42 extends in the circumferential direction. The main grooves 42 are continuous in the circumferential direction without interruption.

The tire may be, for example, a pneumatic tire or a non-pneumatic tire, preferably a pneumatic tire. In particular, the tire is suitable for use as a summer tire, a winter tire (e.g., a studless winter tire, snow tire, cold weather tire, or studded tire), an all season tire, etc. The tire may be used as, for example, a tire for passenger vehicles, large passenger vehicles, large SUVs, heavy duty vehicles such as trucks and buses, light trucks, or motorcycles, or as a racing tire (high performance tire). Among these, the tire is suitable for use as a tire for passenger vehicles or light trucks. The term "tire

for passenger vehicles or light trucks" refers to a tire which is supposed to be mounted on a vehicle that runs on four or more wheels and which has a maximum load capacity (normal load) of 1400 kg or less.

The tire can be produced from the above-described rubber composition by usual methods. For example, the tire may be produced by extruding the unvulcanized rubber composition containing various materials into the shape of a tread, and then assembling it with other tire components in a usual manner on a tire building machine to build an unvulcanized tire, followed by heating and pressing it in a vulcanizer.

Although an embodiment of the present disclosure is described in detail above, the present disclosure is not limited to the specific embodiment and may be implemented in various modified embodiments.

## EXAMPLES

The present disclosure will be specifically described with reference to, but not limited to, examples.

The chemicals used in the examples and comparative examples are listed below.

NR: TSR20
SBR: Nipol 1502 (E-SBR) available from Zeon Corporation
BR: BR150B available from Ube Industries, Ltd.
Carbon black 1: DIABLACK I (N220, $N_2SA$: 114 $m^2/g$, DBP: 114 mL/100 g) available from Mitsubishi Chemical Corporation
Carbon black 2: DIABLACK H (N330, $N_2SA$: 79 $m^2/g$) available from Mitsubishi Chemical Corporation
Carbon black 3: DIABLACK G (N660, $N_2SA$: 28 $m^2/g$) available from Mitsubishi Chemical Corporation
Silica: Zeosil Premium 200MP (average primary particle size: 10 nm) available from Rhodia
Silane coupling agent: Si69 (bis(3-triethoxysilylpropyl)tetrasulfide) available from Evonik-Degussa
Resin 1: Sylvatraxx4401 ($\alpha$-methylstyrene resin, copolymer of $\alpha$-methylstyrene and styrene) available from Arizona Chemical
Resin 2: Sylvatraxx4150 ($\beta$-pinene resin, $\beta$-pinene content: 98% by mass or higher) available from Arizona Chemical
Thermosetting resin: PR-12686E (cashew oil-modified phenol resin represented by formula (1)) available from Sumitomo Bakelite Co., Ltd.
Wax: Ozoace 0355 available from Nippon Seiro Co., Ltd.
Antioxidant 1: NOCRAC 6C (N-(1,3-dimethylbutyl)-N'-phenyl-p-phenylenediamine) available from Ouchi Shinko Chemical Industrial Co., Ltd.
Antioxidant 2: NOCRAC RD (poly(2,2,4-trimethyl-1,2-dihydroquinoline)) available from Ouchi Shinko Chemical Industrial Co., Ltd.
Antioxidant 3: NOCRAC 224 (polymerized 2,2,4-trimethyl-1,2-dihydroquinoline, TMQ) available from Ouchi Shinko Chemical Industrial Co., Ltd.
Stearic acid: stearic acid "TSUBAKI" available from NOF Corporation
Zinc oxide: zinc oxide #2 available from Mitsui Mining & Smelting Co., Ltd.
Sulfur: powdered sulfur available from Tsurumi Chemical Industry Co., Ltd.
Vulcanization accelerator: NOCCELER NS (N-t-butyl-2-benzothiazylsulfenamide) available from Ouchi Shinko Chemical Industrial Co., Ltd.
Curing agent: NOCCELER H (hexamethylenetetramine, HMT) available from Ouchi Shinko Chemical Industrial Co., Ltd.

(Examples and Comparative Examples)

According to the recipe shown in Table 1, the chemicals other than the sulfur and vulcanization accelerator were kneaded for four minutes at 160°C using a 1.7 L Banbury mixer (Kobe Steel, Ltd.) to give a kneaded mixture. Next, the sulfur and vulcanization accelerator were added to the kneaded mixture, and they were kneaded for four minutes at 80°C using an open roll mill to obtain an unvulcanized rubber composition. The unvulcanized rubber composition was formed into the shape of a tread, a bead-reinforcing rubber, or an apex and assembled with other tire components on a tire building machine to build an unvulcanized tire. Then, the unvulcanized tire was vulcanized at 170°C for 12 minutes to prepare a test tire (size: 205/85R16, light truck tire) as shown in Figs. 1 and 2.

The test tires prepared as above were subjected to physical property measurements and evaluation as described below. The results are shown in Table 1.

<Viscoelastic testing>

A viscoelastic measurement sample having a size of 20 mm in length × 4 mm in width × 1 mm in thickness

was collected from inside of the tread of each test tire in such a manner that the longer side of the sample was in the tire circumferential direction. The tan δ and E* at 30°C of each sample (vulcanized rubber composition) were measured using EPLEXOR series available from GABO. The thickness direction of the sample was in the tire radial direction.

Samples were also collected from the apex and bead-reinforcing rubber of each test tire as described above, and the E* at 70°C of the samples were measured.

Here, the tan δ and E* at 30°C were measured under conditions including a temperature of 30°C, an initial strain of 5%, a dynamic strain of 1%, a frequency of 10Hz, and an extension mode, while the E* at 70°C was measured under conditions including a temperature of 70°C, an initial strain of 5%, a dynamic strain of 1%, a frequency of 10Hz, and an extension mode.

<Negative ratio>

The negative ratio of the test tires was measured as described below. The measured negative ratios are indicated in Table 1.

The contact patch of the tread of each test tire was determined by mounting the tire on a normal rim, applying a normal internal pressure to the tire, and allowing the tire to stand at 25°C for 24 hours, followed by applying black ink to the tread surface of the tire and pressing it against a cardboard at a normal load (camber angle: 0°) for transfer to the cardboard. The transfer was performed on the tire in five positions rotated by 72 degrees relative to one another in the circumferential direction. Thus, the contact patch was determined five times. The negative ratio (%) was calculated by the equation below, where L represents the average of the largest lengths in the tire axial direction of the five contact patches, and W represents the average of the lengths in the direction orthogonal to the axial direction thereof. The average length and the average area are each the simple average of the five values.

$$\text{Negative ratio (\%)} = [1 - \{\text{Average of areas of five contact patches transferred to cardboard (parts with black ink)}\}/(L \times W)] \times 100$$

<Rolling resistance>

The rolling resistance of the test tires during running under the conditions described below was measured using a rolling resistance tester and expressed as an index relative to that of Comparative Example 1 taken as 100. A higher index is better (fuel economy).

Mounted rim: 16 × 5.5 J
Tire internal pressure: 600 kPa
Speed: 80 km/h
Load: 16.79 kN

<Abrasion resistance>

The test tires were mounted on a 2D vehicle (3000 cc displacement, 3 ton capacity). After the vehicle was run 8000 km, the groove depth in the tire tread portion was measured. A distance that caused a 1 mm decrease in tire groove depth was calculated and expressed as an index using the equation below. A higher index indicates better abrasion resistance.

$$\text{Abrasion resistance index} = (\text{Distance that caused 1 mm decrease in tire groove depth of each formulation example})/(\text{Distance that caused 1 mm decrease in tire groove depth of Comparative Example 1}) \times 100$$

<Handling stability>

The test tires were mounted on each wheel of a 2D vehicle (3000 cc displacement, 3 ton capacity). Ten test

drivers drove the test vehicle and rated the handling stability on a scale of one to five. A higher rating indicates better performance. The sum of the ten ratings was calculated and expressed as an index (handling stability index) relative to that of the standard comparative example (Comparative Example 1) taken as 100. A higher index indicates better handling stability.

[Table 1]

| | | Example | | | | | | | | | | | | | Comparative Example | | |
|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 1 | 2 | 3 |
| Tread formulation (parts by mass) | NR | 60 | 60 | 60 | 60 | 60 | 60 | 70 | 50 | 60 | 60 | 70 | 60 | 50 | 30 | 30 | 60 |
| | SBR | 20 | 20 | 20 | 20 | 20 | 20 | 15 | 25 | 20 | 20 | 20 | 25 | 30 | 40 | 40 | 20 |
| | BR | 20 | 20 | 20 | 20 | 20 | 20 | 15 | 25 | 20 | 20 | 10 | 15 | 20 | 30 | 30 | 20 |
| | Carbon black 1 | 30 | 25 | 25 | 30 | 25 | 25 | 30 | 30 | 20 | 15 | 20 | 20 | 20 | 30 | 45 | 30 |
| | Silica | 30 | 30 | 30 | 30 | 30 | 30 | 30 | 30 | 30 | 30 | 30 | 30 | 30 | 30 | 20 | 30 |
| | Silane coupling agent | 3.0 | 3.0 | 2.0 | 3.0 | 3.0 | 3.0 | 3.0 | 3.0 | 3.0 | 3.0 | 3.0 | 3.0 | 3.0 | 3.0 | 2.0 | 3.0 |
| | Resin 1 | | | | | 10 | | | | | | | | | | | |
| | Resin 2 | | | | | | 10 | | | | | | | | | | |
| | Wax | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Antioxidant 1 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Antioxidant 2 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Stearic acid | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | Zinc oxide | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| Bead-reinforcing rubber formulation (parts by mass) | NR | 40 | 40 | 40 | 40 | 40 | 40 | 40 | 40 | 40 | 40 | 40 | 40 | 40 | 40 | 40 | 40 |
| | BR | 60 | 60 | 60 | 60 | 60 | 60 | 60 | 60 | 60 | 60 | 60 | 60 | 60 | 60 | 60 | 60 |
| | Carbon black 2 | 58 | 58 | 90 | 58 | 58 | 58 | 75 | 75 | 58 | 58 | 70 | 70 | 70 | 58 | 58 | 58 |
| | Oil | 18 | 18 | 5 | 18 | 18 | 18 | 15 | 15 | 18 | 18 | 17 | 17 | 17 | 18 | 18 | 18 |
| | Stearic acid | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | Zinc oxide | 2.0 | 2.0 | 4.5 | 2.0 | 2.0 | 2.0 | 4.5 | 4.5 | 2.0 | 2.0 | 4.5 | 4.5 | 4.5 | 2.0 | 2.0 | 2.0 |
| | Wax | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Antioxidant 1 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Antioxidant 2 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Sulfur | 2.5 | 2.5 | 2.8 | 2.5 | 2.5 | 2.5 | 2.8 | 2.8 | 2.5 | 2.5 | 2.8 | 2.8 | 2.8 | 2.5 | 2.5 | 2.5 |
| | Vulcanization accelerator | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| Apex formulation (parts by mass) | NR | 85 | 85 | 85 | 85 | 85 | 85 | 85 | 85 | 85 | 85 | 85 | 85 | 85 | 60 | 60 | 85 |
| | SBR | 15 | 15 | 15 | 15 | 15 | 15 | 15 | 15 | 15 | 15 | 15 | 15 | 15 | 40 | 40 | 15 |
| | Carbon black 2 | 75 | 75 | 90 | 75 | 75 | 75 | 75 | 75 | 75 | 75 | 75 | 75 | 75 | | | 85 |
| | Carbon black 3 | | | | | | | | | | | | | | 40 | 40 | |
| | Thermosetting resin | 10 | 10 | 85 | 10 | 20 | 20 | 15 | 15 | 10 | 10 | 13 | 13 | 13 | | | 65 |
| | Oil | 4 | 4 | 4 | 4 | 4 | 4 | 4 | 4 | 4 | 4 | 4 | 4 | 4 | 20 | 20 | 4 |
| | Wax | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Antioxidant 1 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Antioxidant 3 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Stearic acid | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Zinc oxide | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | Sulfur | 3.3 | 3.3 | 3.3 | 3.3 | 3.3 | 3.3 | 3.3 | 3.3 | 3.3 | 3.3 | 3.3 | 3.3 | 3.3 | 3.0 | 3.0 | 3.3 |
| | Vulcanization accelerator | 2.0 | 2.0 | 2.0 | 2.0 | 2.0 | 2.0 | 2.0 | 2.0 | 2.0 | 2.0 | 2.0 | 2.0 | 2.0 | 0.8 | 0.8 | 2.0 |
| | Curing agent | 1.0 | 1.0 | 8.5 | 1.0 | 2.0 | 2.0 | 1.5 | 1.5 | 1.0 | 1.0 | 1.3 | 1.3 | 1.3 | | | 6.5 |
| Physical properties/Evaluation | Isoprene-based rubber/SBR in tread | 3.0 | 3.0 | 3.0 | 3.0 | 3.0 | 3.0 | 4.7 | 2.0 | 3.0 | 3.0 | 3.5 | 2.4 | 1.7 | 0.8 | 0.8 | 3.0 |
| | Isoprene-based rubber/BR in tread | 3.0 | 3.0 | 3.0 | 3.0 | 3.0 | 3.0 | 4.7 | 2.0 | 3.0 | 3.0 | 7.0 | 4.0 | 2.5 | 1.0 | 1.0 | 3.0 |
| | Silica content/Carbon black content in tread | 1.0 | 1.2 | 1.2 | 1.0 | 1.2 | 1.2 | 1.0 | 1.0 | 1.5 | 2.0 | 1.5 | 1.5 | 1.5 | 1.0 | 0.4 | 1.0 |
| | tan δ at 30°C of tread | 0.09 | 0.07 | 0.07 | 0.09 | 0.09 | 0.09 | 0.06 | 0.08 | 0.06 | 0.05 | 0.06 | 0.07 | 0.08 | 0.12 | 0.13 | 0.09 |
| | Negative ratio N (%) of tread | 40 | 40 | 40 | 30 | 40 | 40 | 30 | 30 | 40 | 30 | 20 | 20 | 20 | 40 | 40 | 60 |
| | tan δ at 30°C × N of tread | 3.6 | 2.8 | 2.8 | 2.7 | 3.6 | 3.6 | 1.8 | 2.4 | 2.4 | 1.5 | 1.2 | 1.4 | 1.6 | 4.8 | 5.2 | 5.4 |
| | E1*[MPa] at 30°C of tread | 7.1 | 10.0 | 10.0 | 7.1 | 10.0 | 10.0 | 3.6 | 10.0 | 4.2 | 4.2 | 8.0 | 8.0 | 8.0 | 11.1 | 12.5 | 7.1 |
| | E2*[Mpa] at 70°C of bead-reinforcing rubber | 5.0 | 5.0 | 20.0 | 5.0 | 5.0 | 5.0 | 10.0 | 10.0 | 5.0 | 5.0 | 8.0 | 8.0 | 8.0 | 5.0 | 5.0 | 5.0 |
| | E2* at 70°C of bead-reinforcing rubber/E1* at 30°C of tread | 0.7 | 0.5 | 2.0 | 0.7 | 0.5 | 0.5 | 2.8 | 1.0 | 1.2 | 1.2 | 1.0 | 1.0 | 1.0 | 0.5 | 0.4 | 0.7 |
| | E3*[Mpa] at 70°C of apex | 50 | 50 | 200 | 50 | 65 | 65 | 60 | 60 | 50 | 50 | 56 | 56 | 56 | 1 | 1 | 150 |
| | E3* at 70°C of apex/E2* at 70°C of bead-reinforcing rubber | 10.0 | 10.0 | 10.0 | 10.0 | 13.0 | 13.0 | 6.0 | 6.0 | 10.0 | 10.0 | 7.0 | 7.0 | 7.0 | 0.1 | 0.1 | 30.0 |
| | Fuel economy | 110 | 130 | 130 | 120 | 110 | 110 | 140 | 105 | 135 | 140 | 130 | 120 | 110 | 100 | 90 | 90 |
| | Abrasion resistance | 120 | 110 | 110 | 120 | 120 | 120 | 105 | 115 | 105 | 105 | 105 | 110 | 120 | 100 | 120 | 120 |
| | Handling stability | 110 | 105 | 105 | 120 | 115 | 120 | 120 | 110 | 105 | 105 | 105 | 105 | 105 | 100 | 90 | 110 |

The table shows that significantly excellent overall performance in terms of fuel economy, abrasion resistance,

and handling stability (as expressed by the sum of the three indices of fuel economy, abrasion resistance, and handling stability) was exhibited by the tires of the examples including a tread including a rubber composition in which the rubber composition contained rubber components including an isoprene-based rubber, a polybutadiene rubber, and a styrene-butadiene rubber, and fillers including silica and carbon black, and satisfied relationships (1) to (3), and the tire satisfied relationships (4) and (5) with respect to the tan δ at 30°C of the rubber composition and the negative ratio N (%) of the tread.

Exemplary embodiments of the present disclosure include:

Embodiment 1. A tire, including a tread including a rubber composition,

the rubber composition containing: rubber components including an isoprene-based rubber, a polybutadiene rubber, and a styrene-butadiene rubber; and fillers including silica and carbon black,
the rubber composition satisfying the following relationships (1) to (3):

(1) Isoprene-based rubber content > Styrene-butadiene rubber content;
(2) Isoprene-based rubber content > Polybutadiene rubber content; and
(3) Silica content ≥ Carbon black content,

the tire satisfying the following relationships (4) and (5) with respect to a tan δ at 30°C of the rubber composition and a negative ratio N (%) of the tread:

(4) tan δ at 30°C < 0.10; and
(5) tan δ at 30°C × N < 4.0.

Embodiment 2. The tire according to Embodiment 1,
wherein the silica has an average primary particle size of 20 nm or less.
Embodiment 3. The tire according to Embodiment 1 or 2,
wherein the rubber composition has a liquid plasticizer content of less than 15 parts by mass per 100 parts by mass of the rubber components.
Embodiment 4. The tire according to any one of Embodiments 1 to 3,
wherein the rubber composition has a solid plasticizer content of 5 parts by mass or more per 100 parts by mass of the rubber components.
Embodiment 5. The tire according to any one of Embodiments 1 to 4, including a bead-reinforcing rubber.
Embodiment 6. The tire according to Embodiment 5,
wherein the tire satisfies the following relationship:

$$E2^*/E1^* > 0.3$$

wherein E1* represents a complex modulus at 30°C of the tread and E2* represents a complex modulus at 70°C of the bead-reinforcing rubber.
Embodiment 7. The tire according to any one of Embodiments 1 to 6,
wherein the tire includes an apex and a bead-reinforcing rubber and satisfies the following relationship:

$$E3^* > E2^*$$

wherein E3* represents a complex modulus at 70°C of the apex and E2* represents a complex modulus at 70°C of the bead-reinforcing rubber.
Embodiment 8. The tire according to any one of Embodiments 1 to 7,
wherein the tread has a negative ratio (N) of 40% or lower.
Embodiment 9. The tire according to any one of Embodiments 1 to 8,
wherein the isoprene-based rubber content and the styrene-butadiene rubber content satisfy the following relationship:
Isoprene-based rubber content/Styrene-butadiene rubber content ≥ 1.7.
Embodiment 10. The tire according to any one of Embodiments 1 to 9,
wherein the isoprene-based rubber content and the polybutadiene rubber content satisfy the following relationship:
Isoprene-based rubber content/Polybutadiene rubber content ≥ 2.0.
Embodiment 11. The tire according to any one of Embodiments 1 to 10,

wherein the silica content and the carbon black content satisfy the following relationship:
Silica content/Carbon black content ≥ 1.2.

Embodiment 12. The tire according to any one of Embodiments 1 to 11,
wherein the rubber composition has a silica content of 10 to 100 parts by mass per 100 parts by mass of the rubber components.

Embodiment 13. The tire according to any one of Embodiments 1 to 12,
wherein the rubber composition has a carbon black content of 5 to 80 parts by mass per 100 parts by mass of the rubber components.

Embodiment 14. The tire according to any one of Embodiments 1 to 13,
wherein the tread has a complex modulus E1* at 30°C of 2.0 MPa or higher.

REFERENCE SIGNS LIST

| | |
|---|---|
| 1 | tire |
| 2 | tread portion |
| 2a | tread ground contact surface |
| 2G | tread rubber |
| 3 | sidewall portion |
| 3a | outer surface of sidewall portion 3 |
| 3G | sidewall rubber |
| 4 | bead portion |
| 4a | outer surface of bead portion 4 |
| 4G | clinch rubber |
| 5 | bead core |
| 5a | radially outer surface of bead core 5 |
| 6 | carcass |
| 6A | first carcass ply |
| 6B | second carcass ply |
| 6a | body portion |
| 6b | folded portion |
| 6o | radially outer end |
| 6i | internal portion inclined axially inwardly |
| 6e | external portion inclined axially outwardly |
| 7 | belt layer |
| 7A | inner belt ply |
| 7B | outer belt ply |
| 8 | bead apex rubber |
| 11 | apex |
| 11e | radially outer end of apex 11 |
| 12 | bead-reinforcing rubber |
| 12A | first portion of bead-reinforcing rubber 12 |
| 12B | second portion of bead-reinforcing rubber 12 |
| 12e | radially outer end of bead-reinforcing rubber 12 |
| 12i | radially inner end of bead-reinforcing rubber 12 |
| 20 | chafer rubber |
| 20A | base portion |
| 20B | outer piece portion |
| 20C | inner piece portion |
| 21 | reinforcing member |
| 21e | radially outer end of reinforcing member 21 |
| 26 | groove |
| 42 | main groove |
| C | tire equator |
| Wa | width in tire axial direction of inner belt ply 7A |
| TW | tread width |
| Te | tread edge |

M tire maximum width position
t1 axial thickness of bead-reinforcing rubber 12
t2 axial thickness of apex 11
t4 thickness of reinforcing member 21

## Claims

1. A tire, comprising a tread comprising a rubber composition,

the rubber composition comprising: rubber components including an isoprene-based rubber, a polybutadiene rubber, and a styrene-butadiene rubber; and fillers including silica and carbon black,
the rubber composition satisfying the following relationships (1) to (3):

(1) Isoprene-based rubber content > Styrene-butadiene rubber content;

(2) Isoprene-based rubber content > Polybutadiene rubber content; and

(3) Silica content ≥ Carbon black content,

the tire satisfying the following relationships (4) and (5) with respect to a tan δ at 30°C of the rubber composition and a negative ratio N (%) of the tread:

$$(4)\ \tan\delta \text{ at } 30^\circ\text{C} < 0.10;$$

and

$$(5)\ \tan\delta \text{ at } 30^\circ\text{C} \times N < 4.0 \quad ;$$

the tan δ being measured as described at paragraph [0163] of the description;
and the negative ratio N being measured as described at paragraph [0164] of the description.

2. The tire according to claim 1,
wherein the silica has an average primary particle size of 20 nm or less.

3. The tire according to claim 1 or 2,
wherein the rubber composition has a liquid plasticizer content of less than 15 parts by mass per 100 parts by mass of the rubber components.

4. The tire according to any one of claims 1 to 3,
wherein the rubber composition has a solid plasticizer content of 5 parts by mass or more per 100 parts by mass of the rubber components.

5. The tire according to any one of claims 1 to 4, comprising a bead-reinforcing rubber.

6. The tire according to claim 5,
wherein the tire satisfies the following relationship:

$$E2^*/E1^* > 0.3$$

wherein E1* represents a complex modulus at 30°C of the tread and E2* represents a complex modulus at 70°C of the bead-reinforcing rubber; the complex modulus being measured as described at paragraph [0163] of the description.

**7.** The tire according to any one of claims 1 to 6,
wherein the tire comprises an apex and a bead-reinforcing rubber and satisfies the following relationship:

$$E3^* > E2^*$$

wherein E3* represents a complex modulus at 70°C of the apex and E2* represents a complex modulus at 70°C of the bead-reinforcing rubber.

**8.** The tire according to any one of claims 1 to 7,
wherein the tread has a negative ratio (N) of 40% or lower.

**9.** The tire according to any one of claims 1 to 8,
wherein the isoprene-based rubber content and the styrene-butadiene rubber content satisfy the following relationship:

$$\text{Isoprene-based rubber content/Styrene-butadiene rubber content} \geq 1.7.$$

**10.** The tire according to any one of claims 1 to 9,
wherein the isoprene-based rubber content and the polybutadiene rubber content satisfy the following relationship:

$$\text{Isoprene-based rubber content/Polybutadiene rubber content} \geq 2.0.$$

**11.** The tire according to any one of claims 1 to 10,
wherein the silica content and the carbon black content satisfy the following relationship:

$$\text{Silica content/Carbon black content} \geq 1.2.$$

**12.** The tire according to any one of claims 1 to 11,
wherein the rubber composition has a silica content of 10 to 100 parts by mass per 100 parts by mass of the rubber components.

**13.** The tire according to any one of claims 1 to 12,
wherein the rubber composition has a carbon black content of 5 to 80 parts by mass per 100 parts by mass of the rubber components.

**14.** The tire according to any one of claims 1 to 13,
wherein the tread has a complex modulus E1* at 30°C of 2.0 MPa or higher.

## Patentansprüche

**1.** Reifen, umfassend einen Laufstreifen, der eine Kautschukzusammensetzung umfasst,

wobei die Kautschukzusammensetzung umfasst: Kautschukkomponenten, die einen Isopren-basierten Kautschuk, einen Polybutadien-Kautschuk und einen Styrol-Butadien-Kautschuk enthalten; und Füllstoffe, die Siliciumdioxid und Ruß enthalten,
wobei die Kautschukzusammensetzung den folgenden Verhältnissen (1) bis (3) genügt:

(1) Gehalt an Isopren-basiertem Kautschuk > Gehalt an Styrol-Butadien-Kautschuk;
(2) Gehalt an Isopren-basiertem Kautschuk > Gehalt an Polybutadien-Kautschuk; und
(3) Gehalt an Siliciumdioxid ≥ Gehalt an Ruß,

wobei der Reifen den folgenden Verhältnissen (4) und (5) bezüglich eines tan $\delta$ bei 30°C der Kautschukzusammensetzung und eines Negativanteils N (%) des Laufstreifens genügt:

(4) tan $\delta$ bei 30°C < 0.10; und
(5) tan $\delta$ bei 30°C $\times$ N < 4,0;

wobei der tan $\delta$ gemessen ist wie in Absatz [0163] der Beschreibung erläutert;
und der Negativanteil N gemessen ist wie in Absatz [0164] der Beschreibung erläutert.

**2.** Reifen nach Anspruch 1,
wobei das Siliciumdioxid eine mittlere Primärpartikelgröße von 20 nm oder weniger aufweist.

**3.** Reifen nach Anspruch 1 oder 2,
wobei die Kautschukzusammensetzung einen Gehalt an flüssigem Weichmacher von weniger als 15 Massenteilen pro 100 Massenteile der Kautschukkomponenten aufweist.

**4.** Reifen nach einem der Ansprüche 1 bis 3,
wobei die Kautschukzusammensetzung einen Gehalt an festem Weichmacher von 5 Massenteilen oder mehr pro 100 Massenteile der Kautschukkomponenten aufweist.

**5.** Reifen nach einem der Ansprüche 1 bis 4, umfassend einen Wulst-verstärkenden Kautschuk.

**6.** Reifen nach Anspruch 5,
wobei der Reifen dem folgenden Verhältnis genügt:

$$E2^*/E1^* > 0{,}3$$

wobei E1* einen komplexen Modul bei 30°C des Laufstreifens und E2* einen komplexen Modul bei 70°C des Wulst-verstärkenden Kautschuks darstellt; wobei der komplexe Modul gemessen ist wie in Absatz [0163] der Beschreibung erläutert.

**7.** Reifen nach einem der Ansprüche 1 bis 6,
wobei der Reifen einen Apex und einen Wulst-verstärkenden Kautschuk umfasst und dem folgenden Verhältnis genügt:

$$E3^* > E2^*$$

wobei E3* einen komplexen Modul bei 70°C des Apex und E2* einen komplexen Modul bei 70°C des Wulst-verstärkenden Kautschuks darstellt.

**8.** Reifen nach einem der Ansprüche 1 bis 7,
wobei der Laufstreifen einen Negativanteil (N) von 40% oder niedriger aufweist.

**9.** Reifen nach einem der Ansprüche 1 bis 8,
wobei der Gehalt an Isopren-basiertem Kautschuk und der Gehalt an Styrol-Butadien-Kautschuk dem folgenden Verhältnis genügen:

Gehalt an Isopren-basiertem Kautschuk / Gehalt an Styrol-Butadien-Kautschuk ≥ 1,7.

**10.** Reifen nach einem der Ansprüche 1 bis 9,
wobei der Gehalt an Isopren-basiertem Kautschuk und der Gehalt an Polybutadien-Kautschuk dem folgenden Verhältnis genügen:

Gehalt an Isopren-basiertem Kautschuk / Gehalt an Polybutadien-Kautschuk ≥ 2,0.

**11.** Reifen nach einem der Ansprüche 1 bis 10,
wobei der Gehalt an Siliciumdioxid und der Gehalt an Ruß dem folgenden Verhältnis genügen:
Gehalt an Siliciumdioxid / Gehalt an Ruß ≥ 1,2.

**12.** Reifen nach einem der Ansprüche 1 bis 11,
wobei die Kautschukzusammensetzung einen Gehalt an Siliciumdioxid von 10 bis 100 Massenteilen pro 100 Massenteile der Kautschukkomponenten aufweist.

**13.** Reifen nach einem der Ansprüche 1 bis 12,
wobei die Kautschukzusammensetzung einen Gehalt an Ruß von 5 bis 80 Massenteilen pro 100 Massenteile der Kautschukkomponenten aufweist.

**14.** Reifen nach einem der Ansprüche 1 bis 13,
wobei der Laufstreifen einen komplexen Modul E1* bei 30°C von 2,0 MPa oder höher aufweist.

**Revendications**

**1.** Pneumatique, comprenant une bande roulement comprenant une composition de caoutchouc,

la composition de caoutchouc comprenant : des composants de caoutchouc incluant un caoutchouc à base d'isoprène, un caoutchouc polybutadiène et un caoutchouc styrène-butadiène ; et des charges incluant de la silice et du noir de carbone,
la composition de caoutchouc satisfaisant aux relations (1) à (3) suivantes :

(1) Teneur en caoutchouc à base d'isoprène > Teneur en caoutchouc styrène-butadiène ;
(2) Teneur en caoutchouc à base d'isoprène > Teneur en caoutchouc polybutadiène ; et
(3) Teneur en silice > Teneur en noir de carbone,

le pneumatique satisfaisant aux relations (4) et (5) suivantes concernant une tan δ à 30 °C de la composition de caoutchouc et un rapport négatif N (%) de la bande de roulement :

(4) tan δ à 30 °C < 0,10 ; et
(5) tan δ à 30 °C × N < 4,0 ;

la tan δ étant mesurée tel que décrit au paragraphe [0163] de la description ;
et le rapport négatif N étant mesuré tel que décrit au paragraphe [0164] de la description.

**2.** Pneumatique selon la revendication 1,
dans lequel la silice a une taille moyenne de particules primaires de 20 nm ou moins.

**3.** Pneumatique selon la revendication 1 ou 2,
dans lequel la composition de caoutchouc a une teneur en plastifiant liquide inférieure à 15 parties en masse pour 100 parties en masse des composants de caoutchouc.

**4.** Pneumatique selon l'une quelconque des revendications 1 à 3,
dans lequel la composition de caoutchouc a une teneur en plastifiant solide de 5 parties en masse ou plus pour 100 parties en masse des composants de caoutchouc.

5. Pneumatique selon l'une quelconque des revendications 1 à 4, comprenant un caoutchouc de renfort de bande de roulement.

6. Pneumatique selon la revendication 5,

dans lequel le pneumatique satisfait à la relation suivante :

$$E2^*/E1^* > 0,3$$

dans laquelle E1* représente un module complexe à 30 °C de la bande de roulement et E2* représente un module complexe à 70 °C du caoutchouc de renfort de bande de roulement ; le module complexe étant mesuré tel que décrit au paragraphe [0163] de la description.

7. Pneumatique selon l'une quelconque des revendications 1 à 6,

dans lequel le pneumatique comprend un bourrage sur tringle et un caoutchouc de renfort de bande de roulement et satisfait à la relation suivante :

$$E3^* > E2^*$$

dans laquelle E3* représente un module complexe à 70 °C du bourrage sur tringle et E2* représente un module complexe à 70 °C du caoutchouc de renfort de bande de roulement.

8. Pneumatique selon l'une quelconque des revendications 1 à 7,
dans lequel la bande de roulement a un rapport négatif (N) de 40 % ou moins.

9. Pneumatique selon l'une quelconque des revendications 1 à 8,
dans lequel la teneur en caoutchouc à base d'isoprène et la teneur en caoutchouc styrène-butadiène satisfont à la relation suivante :

Teneur en caoutchouc à base d'isoprène / Teneur en caoutchouc styrène-butadiène ≥ 1,7.

10. Pneumatique selon l'une quelconque des revendications 1 à 9,
dans lequel la teneur en caoutchouc à base d'isoprène et la teneur en caoutchouc polybutadiène satisfont à la relation suivante :

Teneur en caoutchouc à base d'isoprène / Teneur en caoutchouc polybutadiène ≥ 2,0.

11. Pneumatique selon l'une quelconque des revendications 1 à 10,
dans lequel la teneur en silice et la teneur en noir de carbone satisfont à la relation suivante :

Teneur en silice / Teneur en noir de carbone ≥ 1,2.

12. Pneumatique selon l'une quelconque des revendications 1 à 11,
dans lequel la composition de caoutchouc a une teneur en silice de 10 à 100 parties en masse pour 100 parties en masse des composants de caoutchouc.

13. Pneumatique selon l'une quelconque des revendications 1 à 12,
dans lequel la composition de caoutchouc a une teneur en noir de carbone de 5 à 80 parties en masse pour 100

parties en masse des composants de caoutchouc.

**14.** Pneumatique selon l'une quelconque des revendications 1 à 13, dans lequel la bande de roulement a un module complexe E1* à 30 °C de 2,0 MPa ou plus.

FIG.1

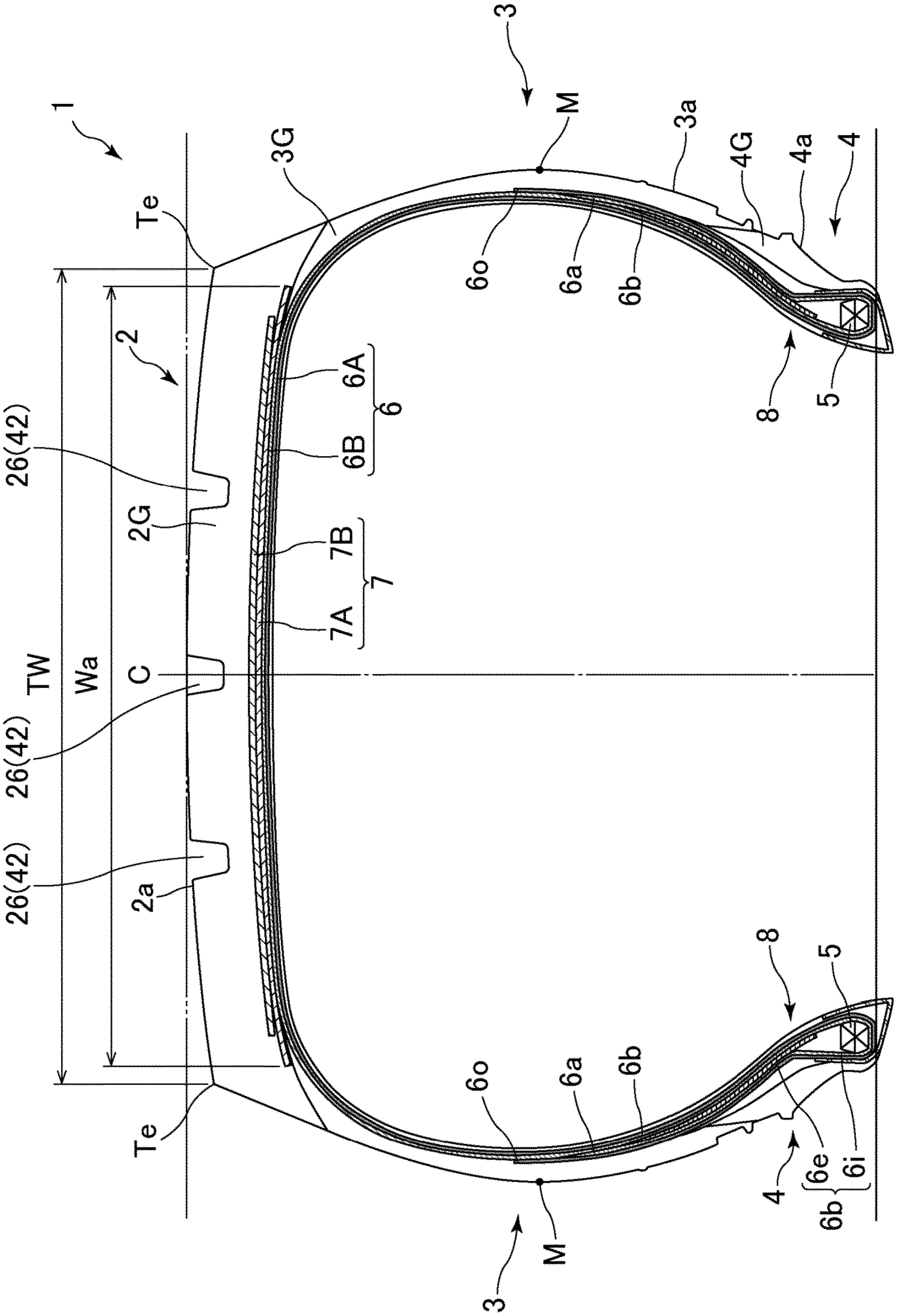
1
2
3
3a
3G
4
4a
4G
5
6
6A
6B
6a
6b
6e
6i
6o
7
7A
7B
8
2G
2a
26(42)
TW
Wa
C
Te
M

FIG.2